# EUROPÄISCHE PATENTSCHRIFT

(11) **EP 0 617 224 B1**
(45) Veröffentlichungstag und Bekanntmachung des Hinweises auf die Patenterteilung: **24.04.1996**
(21) Anmeldenummer: 94101616.4
(22) Anmeldetag: 02.02.1994
(51) Int. Cl.: F16M 13/00

(54) **Trägersystem für in Gehäuse oder Gestelle eingebaute gewichtige Teilaggregate**
Supporting systems for heavy elements of units mounted in casings or frames
Système de support d'éléments pesants d'ensembles montés dans des bâtis ou des chassis

(30) Priorität: 22.03.1993 DE 9304289 U
(43) Veröffentlichungstag der Anmeldung: 28.09.1994
(73) Patentinhaber: Siemens Nixdorf Informationssysteme Aktiengesellschaft, D-33102 Paderborn (DE)
(72) Erfinder: Bräutigam, Alfons, D-33106 Paderborn (DE)
(74) Vertreter: Fuchs, Franz-Josef, Dr.-Ing.

(56) Entgegenhaltungen:
- AT-B- 387 503
- DE-A- 1 920 696
- DE-U- 9 304 289
- FR-A- 2 253 495
- US-A- 2 348 640
- US-A- 4 755 010

## Beschreibung

Die Erfindung betrifft ein Trägersystem für in Gehäuse oder Gestelle eingebaute gewichtige Teilaggregate, z.B. für Laserdrucker in Belegausgabeterminals.

Komponenten und Teilaggregate von technischen Einrichtungen werden häufig in Gestelle oder verschließbare Gehäuse eingebaut und sind im eingebauten Zustand z.B. für den Wartungsdienst schwer zugänglich. Um die Zugänglichkeit zu erleichtern, werden die eingebauten Komponenten oder Teilaggregate im Gehäuse oder Gestell verschiebbar oder kippbar gelagert, so daß sie herausgezogen oder herausgekippt werden können. Aus der AT-B- 387 503 ist ein Trägergehäuse mit einer horizontal verschiebbaren Tragplatte für z.B. einen Fernsehapparat mit den Merkmalen des Oberbegriffs des Anspruchs 1 bekannt, wobei die Tragplatte zusätzlich eine Drehteller aufweist. Bei größeren und schwereren Teilaggregaten, wie z.B. einem Laserdrucker in einem Kassenterminal, muß eine verschiebbare Halterung entsprechend stabil ausgebildet sein, damit das Teilaggregat auch weit genug herausgezogen werden kann. Dabei muß das Teilaggregat sowohl in der Einbauals auch in der Auszugsstellung ausreichend fixierbar sein. Bei empfindlichen Teilaggregaten muß außerdem sichergestellt sein, daß der Übergang in die beiden Verschiebestellungen ausreichend gedämpft ohne harten Anschlag erfolgt, um Erschütterungen zu vermeiden.

Die Erfindung löst dieses Problem durch die Merkmale des Anspruches 1. Danach besteht die neue Lösung aus einem Paar von Teleskopschienen mit einer Tragplatte für das Teilaggregat in Verbindung mit einer schwenkbaren Gasfeder zur Abstützung der zugehörigen Teleskopschiene im ausgezogenen Zustand und zur Fixierung der beiden Stellungen. Neben einer Abstutzung nur einer der beiden Teleskopschien können auch beide Teleskopschienen durch eine eigene Gasfeder abgestützt werden., so daß das Trägersystem insgesamt stabiler ist und starker belastet werden kann. Auch kann die Zugänglichkeit für das eingebaute Teilaggregat weiter erleichtert werden, wenn auf der Tragplatte zusätzlich ein Drehteller als drehbare Halterung für das Teilaggregat angebracht ist. Damit sind alle Seiten des Aggregats in gleicher Weise leicht zugänglich, und bei entsprechend langen Anschlußkabeln kann eine Überprüfung auch in Verbindung mit den anderen Teilaggregaten leicht durchgeführt werden.

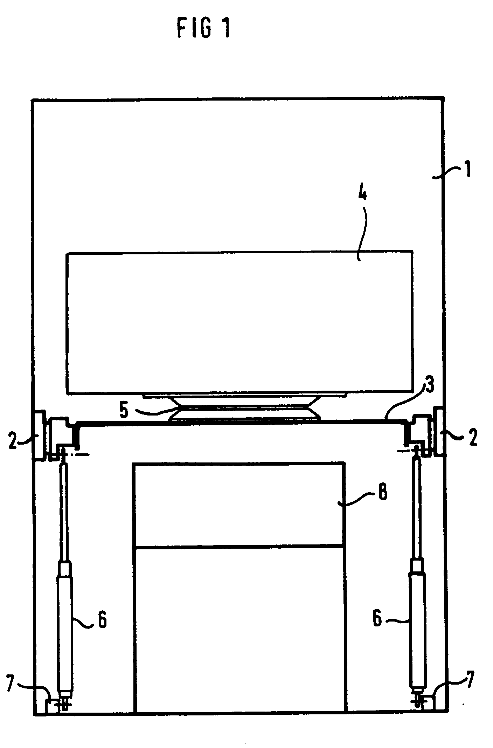

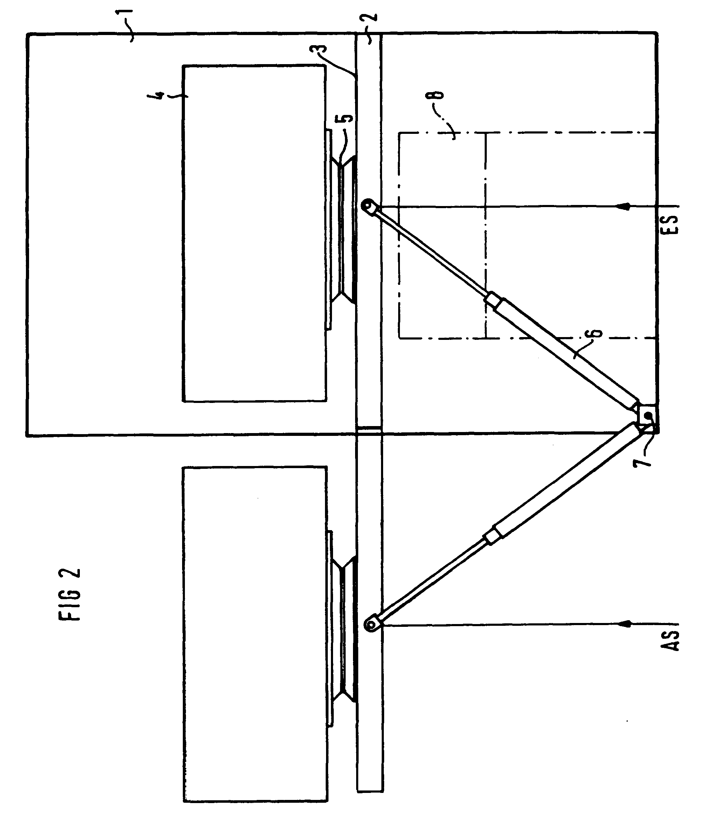

Einzelheiten der Erfindung seien nachfolgend anhand der Zeichnung näher erläutert, die das neue Trägersystem in prinzipieller Darstellung gemaß Figur 1 in der Vorderansicht und gemäß Figur 2 in der Seitenansicht zeigt.

Mit 1 ist in beiden Figuren ein Gehäuse oder Gestell angedeutet, in das das Teilaggregat 4 eingebaut ist. Dieses Teilaggregat 4 ist auf einem Drehteller 5 drehbar gehalten, der auf einer Tragplatte 3 angebracht ist. Diese Tragplatte 3 ist auf zwei seitlichen Teleskopschienen 2 horizontal verschiebbar gelagert, die unmittelbar am Gehäuse oder Gestell 1 oder an einer weiter innen liegenden Halterung befestigt sein können. Die Dimensionierung und Ausbildung dieser Teleskopschienen 2 ist in bekannter Weise abhängig von der aufzunehmenden Traglast und der erforderlichen Auszugslänge.

Im vorliegenden Fall sind beide Teleskopschienen 2 mit jeweils einer Gasfeder 6 gekoppelt, die mit ihrem einen Ende schwenkbar an einer Halterung 7 am Boden des Gehäuses 1 befestigt sind. Der Zwischenraum zwischen diesen Gasfedern 6 unterhalb der Tragplatte 3 kann in bekannter Weise für die Unterbringung anderer Aggregate 8 genutzt werden.

Wie Figur 2 in der Seitenansicht zeigt, ist die Halterung 7 für die Gasfedern 6 in der Mitte zwischen den durch die größte Auslenkung der Gasfeder 6 bedingten beiden Endstellungen, nämlich der Einbaustellung ES und der ausgezogenen Stellung AS des Teilaggregates 4 vorgesehen, und die Länge der Gasfedern 6 ist so bemessen, daß diese zum Erreichen der beiden Endstellungen ohne Begrenzung durch die die Endstellungen markierende Anschläge der Teleskopschienen voll auslenkbar sind. Die Erfindung nutzt dabei die Eigenschaften der Gasfedern, immer die längstmögliche Ausdehnung anzunehmen. Dadurch wird die Tragplatte nach Überschreiten der kürzesten Gasfederlänge automatisch in die jeweilige Endstellung ES oder AS geschoben. Außerdem erfolgen die Transportbewegungen aufgrund der Trägheit der Gasfeder immer gedämpft, zumal beim Wechsel der Endstellungen die Gasfeder bis zum Erreichen ihrer kürzesten Länge zunächst zusammengedrückt werden muß.

## Patentansprüche

1. Trägersystem für in Gehäuse oder Gestelle (1) eingebaute gewichtige Teilaggregate (4), z.B. für Laserdrucker in Belegausgabeterminals, mit einer auf zwei horizontal ausziebaren Teleskopschienen (2) gelagerten Tragplatte (3) für das Teilaggregat (4),
**gekennzeichnet** durch
eine seitlich unterhalb einer Teleskopschiene (2) schwenkbar angeordnete Gasfeder (6), die im ausgelenkten Zustand die Tragplatte (3) sowohl in der vorgegebenen Einbaustellung (ES) als auch im ausgezogenen Zustand der Teleskopschienen (2) in der Auszugsstellung (AS) fixiert hält.

2. Trägersystem nach Anspruch 1,
**dadurch gekennzeichnet**,
daß seitlich unterhalb jeder Teleskopschiene (2) eine schwenkbare Gasfeder (6) zur Fixierung der beiden Endstellungen (ES, AS) der horizontal verschiebbaren Tragplatte (3) angeordnet ist.

3. Trägersystem nach Anspruch 1 oder 2,
**dadurch gekennzeichnet**,
daß auf der horizontal verschiebbaren Tragplatte (3) ein Drehteller (5) als drehbare Halterung für das Teilaggregat (4) angebracht ist.

## Claims

1. Support system for heavy subunits (4) which are installed in housings or frameworks (1), for example for laser printers in voucher output terminals, having a supporting plate (3), which is mounted on two horizontally extendable telescopic rails (2), for the subunit (4),
characterized by
a gas spring (6) which is arranged at the side underneath a telescopic rail (2) such that it can pivot and, in the extended state, holds the supporting plate (3) fixed both in the predetermined retracted position (ES) and in the extended position (AS) where the telescopic rails (2) are in the extended state.

2. Support system according to Claim 1,
characterized in that
a gas spring (6), which can pivot, is arranged at the side underneath each telescopic rail (2), in order to fix the two limit positions (ES, AS) of the horizontally displaceable supporting plate (3).

3. Support system according to Claim 1 or 2,
characterized in that
a rotating plate (5) is fitted on the horizontally displaceable supporting plate (3), as a rotatable holder for the subunit (4).

## Revendications

1. Système de support d'unités partielles pesantes (4) montées dans des boîtiers ou dans des châssis (1), par exemple pour une imprimante laser dans des terminaux d'édition de documents, comportant une plaque de support (3) de l'unité partielle (4), qui est montée sur deux rails télescopiques (2) pouvant être sortis horizontalement, caractérisé par
un ressort pneumatique (6) qui est monté de manière à pouvoir basculer latéralement au-dessous d'un rail télescopique (2) et qui, à l'état déployé, maintient la plaque de support (3) maintient immobilisée aussi bien dans la position de montage prescrite (ES) que, lorsque les rails télescopiques (2) sont sortis, dans la position sortie (AS).

2. Système de support suivant la revendication 1, caractérisé par le fait qu'un ressort pneumatique pouvant basculer (6) et destiné à immobiliser dans ses deux positions d'extrémité (ES, AS), la plaque de support (3) pouvant coulisser horizontalement est disposé latéralement au-dessous de chaque rail télescopique (2).

3. Système de support suivant la revendication 1 ou 2, caractérisé par le fait qu'un plateau tournant (5) est monté en tant que fixation tournante de l'unité partielle (4), sur la plaque de support (3) pouvant coulisser horizontalement.
